# EUROPEAN PATENT APPLICATION

(11) **EP 2 009 929 A2**
(43) Date of publication of application: **31.12.2008**
(21) Application number: 08104430.7
(22) Date of filing: 16.06.2008
(51) Int. Cl.: H04N 9/64

(54) **Adaptable screen adjustment for non-vertical viewing angles in display systems**

(30) Priority: 29.06.2007 TR 200704550
(71) Applicant: Vestel Elektronik Sanayi ve Ticaret A.S., 45030 Manisa (TR)
(72) Inventor: Boran, Baris, 45030 Manisa (TR)
(74) Representative: Cayli, Hülya

(57) **Abstract**

According to the nature of display devices, and especially in LCD television sets, as it is faced when the users try to watch the screen from sides, side angle viewing problems emerge. By the present invention, after the user identifies his image preference by the remote controller, the position of the user relative to the TV set is determined in three dimensional space by pressing a pre-defined button on the remote controller, and different image parameters may be applied to multiple points on the TV display system. By this invention, the image quality perceived by the user is improved by finding the angular position of the user relative to the TV set. Even though the invention is especially considered for LCD TV sets, it can also be used for other display systems.

## Description

### Technical Field

Current invention relates to a system and method that provide local improvement on the image according to the position of the user in three dimensional space to improve the view quality.

### Prior Art

In the first days of the screen technology, viewers were seriously suffering from the view quality loss they encountered when they changed position. In the first LCD (Liquid Crystal Display) screen technologies, viewing angle was less than 140 degrees and perceived view quality was limited on every direction except vertical viewing angle.

Even though the LCD (Liquid Crystal Display) devices provide some advantages in terms of power consumption and weight when compared to CRT (Cathode Ray Tube) screen devices, the perceived picture of LCD screens are affected by viewing angle to a large extent.

Some of the viewing parameters can not be changed as can be adapted by the user and some predefined values related to these parameters are stored in the TV set even when the user changed his place.

In the patent document US5488434, a method for adjusting the color values and the other parameters according to position of the user is described. According to this system included in the prior art, the user defines his position relative to the mechanism of TV stand in a first step and this invention improves the perceived image quality by changing the screen parameters according to this defined distance and in this context it utilizes a radio frequency (RF) transmitter and evaluates the position of the user by using the calculated RF signal value and other factors.

When compared to other systems in the prior art, the users are asked to define their position relative to the TV system and even though the position of the user is correctly estimated, the color adjustments are performed all over the screen system and in this context, some things are ignored such as changes in user's position, user's getting closer to a specific side of screen system and therefore getting further from the other side.

### Object of the Invention

The object of this invention is to produce a user friendly TV set that has adaptable screen parameters allowing improvement of local - based image quality according to the position of user in three dimensional space.

### Brief Description of the Figures

Figure 1 is a general view of the system according to current invention.
Figure 2 shows the preferred viewing angle of the user relative to TV screen interface.
Figure 3 shows the TV set with a sample viewing angle.
Figure 4 shows the position of the user and different points on view screen.
Figure 5 shows the position of the user and the adaptable color adjustment performed according to this position.

The parts in the figures are given reference numbers and these numbers are described below.
Sensors that can receive RF signals (1), (2), (3)
The preferred viewing angle of the user (4)
The position and the viewing angle of the user (5)
Local points randomly defined on the screen (6), (7), (8)
Corner points of the screen (A), (B)

### Detailed Description of the Invention

According to the nature of screen devices, and especially in LCD television sets, as it is faced when the users try to watch the screen from sides, side angle viewing problems emerge. Image adjustments such as contrast and brightness should for example increased or decreased according to the position of the user in order to improve the perceived image quality, and they should be increased if the user is in a far position from the TV set, and softer and less contrasted images should be provided to the users staying closer to the TV set.

The optional configuration of the current invention comprises a combination of a remote controller (this remote controller can run the TV set), sensors which constitute a sensor mechanism included in the TV set (receives the signal or signals coming from the remote controller) and a TV set image adjustment mechanism that can perform local - based image improvement according to the position of the user.

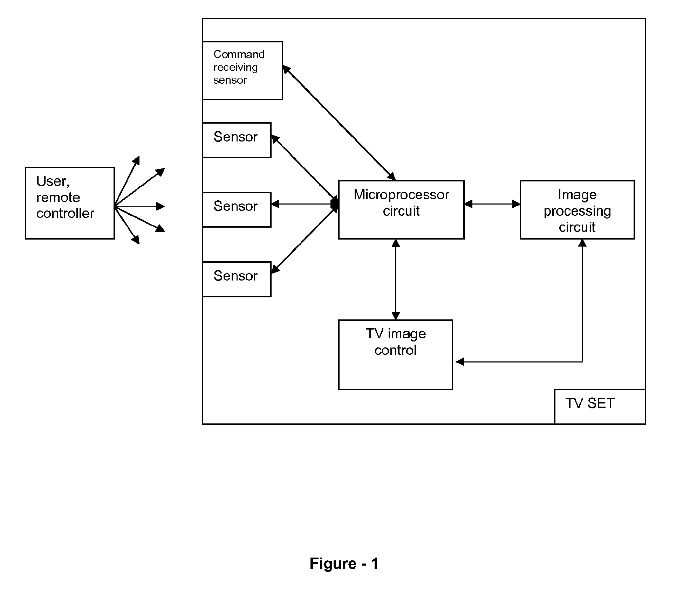

The user first may determine how to perform color adjustment according to his position by selecting among the pre-loaded options or may use pre-loaded settings, for example the user may choose softer image quality when viewing from a closer location or sharper image quality when viewing from a further location or may accept the pre-loaded standard settings before making any selection. During normal use of screen system, the user makes the color adjustment of the current invention according to his three dimensional position by pushing a pre-defined button on the remote controller. In the preferred configuration of the invention, after an RF signal is sent to the screen system the said signal is detected by the sensors (1, 2, 3) included in the sensor mechanism on the system. A comparator mechanism in the current invention compares the amplitudes of the RF signals received by the sensors (1, 2, 3). General block diagram of the system of this invention is given in Figure 1.

According to comparison of the amplitudes of the RF signals received by the sensors (1, 2, 3), the current invention calculates the position of the user and this procedure is performed logically according to this idea: the signal power rates received by the sensors (1, 2, 3) are compared with each other for the same transmitted signal and it is assumed that the user is closer to the sensor detecting the biggest power level and further to the sensor detecting the smaller power level. The reason for selecting at least three sensors is to create a three dimensional space to determine the position of the user not only vertically but also to determine horizontally at the same time.

The reason for using the transmitters and sensors that can transmit and receive RF signals is that: Even though most of the TV sets utilize infrared communication systems (such as RC5), it is almost impossible to evaluate the signal power in infrared communication systems and similarly it becomes very difficult to determine the position of the user. It is possible to use any transmitter - receiver combination that can detect the position of the user in three dimensional space in the context of present invention, in this scope RF transmitters may be on TV side and RF receivers may be on remote controller side.

After the comparison of power levels received by the sensors (1, 2, 3), the current invention estimates the position of the user and refers to a previously created reference table to make the image adjustment according to the user's position. These reference tables may be pre-loaded into the system or may be created before any adjustment is made on the image according to the selection of the user or determined distance or position of the user, by this way instead of creating different reference tables for each user selection or angular position, reference tables may be created according to the parameters entered at that moment. Said reference table is previously created in the system in order to increase system's effectiveness. By determining the position of the user, the other parameters related to sharpness, saturity and distance may be changed to suit the updated situation and in this context while the part of the screen closer to the user displays softer and less contrasted images, the part of the screen further to the user may utilize sharper and more contrasted images, however it should be noted that this given image parameters are exemplary and all color adjustments allowing adaptation on the screen can be made in the context of this patent. Determination of the user's position in three dimensional space lets finding the distance of the user as well as the angular position of the user relative to TV set, by this way the invention may be used not only for angular image quality but also for the distance of any user to the TV set or for any position.

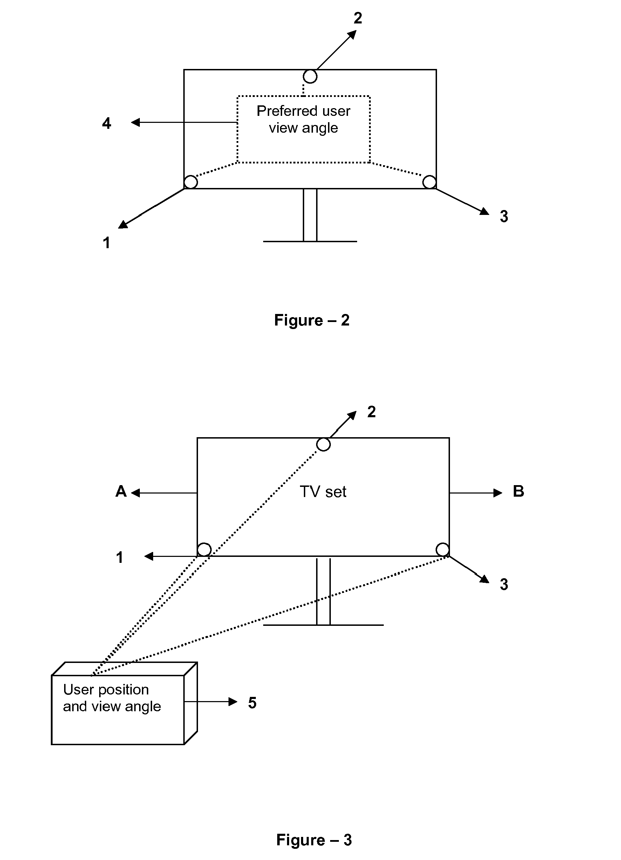

The inactive viewing angle of the user is drawn in Figure 2; here the view angle of the user is aligned with television screen and it is evaluated that maximum image quality is perceived.

Most of the image quality parameters such as sharpness and contrast values in TV sets are set for the normal distance values (i.e. 1 meter) assumed that the user would watch the TV set from a constant distance and view angle (mostly vertical angle); but for the properties of the present invention, the angular position and distance value of the user are taken into consideration by local - based increment of the image parameters.

The position of the user relative to TV screen is shown in Figure 3; here, the user is located on the left and below the television set and makes a local - based image improvement on the TV screen by pushing a button on the remote controller from this distance.

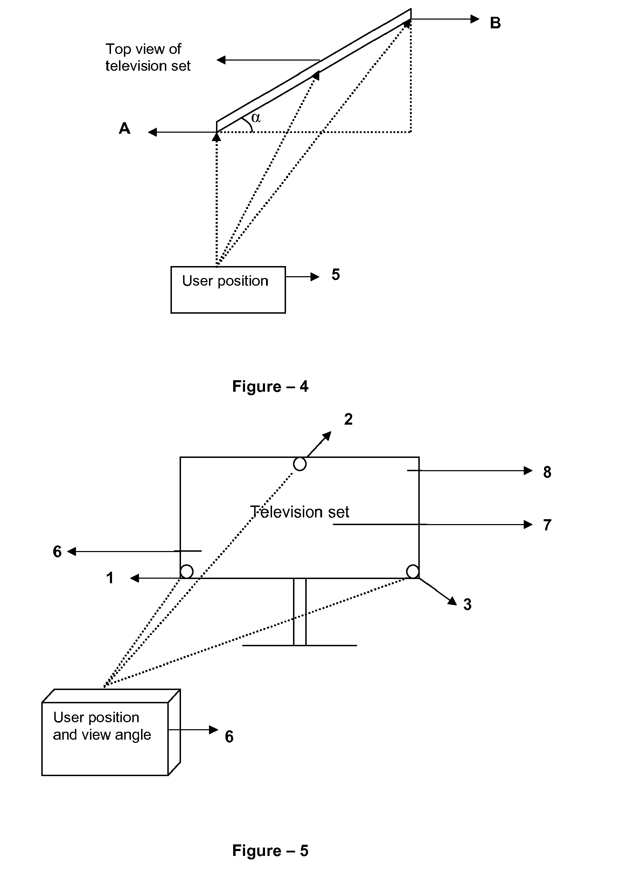

By the two opposite points indicated on the TV screen in Figure 3, for a user watching the television in an angle, it can be clearly seen in Figure 4 that the point marked by "A" is closer to him than the point marked by "B". Figure 4 shows the top view of the situation shown in Figure 3; according to this when the relative distance is considered in one dimension, in fact there is a relative distance between the selected two "A" and "B" points according to the view angle of the user and point "B" is at a constant distance given approximately by (screen width)*(sinα) relatively from point "A" to the location of the user. This relation is based on the assumption that both "A", "B" and user's position are aligned, otherwise to find the exact relative distance between "A" and "B" points, it is possible to make a more complex analysis in three dimensional space.

For example, in case that the screen is viewed indirectly with 37 degrees from the left relative to a user, for the constant value given above and for a screen width of 100 cm, the opposite sides of the screen ("A" and "B" in this example) are located at a relative distance of approximately 60 cm [(1 00cm)*(sin37)=60cm] to the view point of the user.

According to the properties of the present invention, the remote controller assumed to be in the same direction with the view angle of the user sends an RF signal and these signals can be received by all sensors (1, 2 and 3) drawn in Figures 2 and 3. The signals received by the sensors (1, 2 and 3) are compared to each other and as shown in Figure 5, the calculated RF powers of the sensors referenced by "1, 2 and 3" should be in 1 > 2 > 3 order, because while sensor "1" is the closest sensor to the user sensor "3" is the farthest sensor to the user. After evaluation powers of the RF signals received by the sensors (1, 2 and 3), required image adjustment values are compared to a previously created reference table and these image adjustments are performed.

All image quality parameters can be changed to be adapted for the calculated position of the user in three dimensional space, however by this example, by assuming that the users prefer more contrasted and sharper colors as getting farther from the screen, owing to the properties of the present invention, after estimation of the position of the user on left and downward directions, the image parameters that are valid on whole screen in Figure 4 are changed to adapt this situation. In a specific example shown in Figures 3, 4 and 5, by comparing the power levels received by the sensors, it is calculated that the position of the user is left and below, and sharpness and contrast values are changed to adapt this situation, for example the sharpness values of the marked local areas (6, 7, 8) are changed as 8 > 7 > 6 and the contrast values are changed as 8 > 7 > 6. The reason for such a selection is that the point "8" is the farthest and point "6" is the closest point to the user. According to the view preferences of the user and to angular position in three dimensional space, it should be noted that it is possible to make every kind of color adjustments.

By determining the position of the user in three dimensional space, the local adapted color adjustment of the user can be performed not only for left and right user positions but also for high and low user positions, because the position of the user relative to the points on the screen will be different and it will have to be adjusted according to this.

In a preferred embodiment of the present invention, the RF signals transmitted from the remote controller are detected by the sensors included in the sensor mechanism and positioned on different regions of the screen. The relative position of the user to the screen is defined by evaluating these received signal values by a micro processor. Micro processor circuit, at the same time, controls the color adjustment process based on the preferences of the user. A local image adjustment is made on the screen based on the evaluated image setting preferences of the user and determined position of the user. This procedure is performed by the cooperative work of the micro processor and the integrated responsible from the video settings. The color values of each pixel in the LCD television sets can be changed, and owing to this invention on different regions of the screen, different color adjustments may be performed automatically according to the position of the user. The TV set manufacturer may decide which adjustments to do on which regions and how much to do them, or allow the user to choose one or more of the options by providing lots of options to the user. For example, as there can be 3 regions (6, 7, 8) on the screen where there are different image adjustments like the one in Figure 5, the number of these regions can be increased or decreased by the manufacturer, or by asking the user how many regions should be on the TV set and how he wants the image settings to change according to the position, the image settings can be changed by considering answers of the user according to the position of the user. The selections of the user are stored in a memory by the microprocessor, and when the user starts to use the invention the image parameter changes that the user asked according to the position of the user on more than one position on the TV set. If the user makes no selection, in the preferred embodiment of the invention, the image adjustments are made according to 3 regions defined on the screen determined by the TV set manufacturer as it will be softer on the regions close to the user and sharper on the regions far from the user. It should be noted that the number of the regions and the image parameters in the preferred embodiment of the invention should not limit the invention, and different image parameters are applied on one or more different regions on the TV screen according to the three dimensional position of the user, the quality of the image perceived by the user is improved.

The present invention is applicable not only to LCD television sets but also to CRT television sets and other screen systems.

## Claims

1. A system for display systems to determine the position of the user relative to TV set and to make image adjustments, **characterized in that** it comprises;
- a remote controller device that can transmit signals;
- a sensor mechanism to receive the signals transmitted by the said remote controller device;
- a processor circuit to determine the position of the user by evaluation of the data received by the said sensor mechanism;
- the said processor circuit controlling the image adjustment process;
- a processor circuit to adjust the image parameters according to the determined position of the user by applying different image parameters on at least one region on the screen image.

2. A system according to Claim 1, **characterized in that** the said remote controller device transmits radio frequency (RF) signals and said sensor mechanism receives these radio frequency (RF) signals.

3. A system according to Claim 1, **characterized in that** the said sensor mechanism includes at least three sensors that can receive the signals transmitted by the said remote controller device.

4. A system according to Claim 1, **characterized in that** the said micro processor circuit to determine the position of the user has a reference table for estimating the position of the user in accordance with the said sensor mechanism.

5. A system according to Claim 1, **characterized in that** the said micro processor circuit includes previously created reference tables to save the image adjustment parameters.

6. A method for display systems to make image adjustments on display image according to the position of the user in three dimensional space, **characterized in that** it comprises the steps of;
- pushing a button on the remote controller by the user to determine the angular position of the user relative to the TV set;
- determining the angular position of the user relative to the TV set;
- adjusting the color parameters by the system as being adapted to more than one regions on the display image according to the determined angular position of the user.
